# EUROPÄISCHE PATENTSCHRIFT

(11) **EP 1 157 315 B1**
(45) Veröffentlichungstag und Bekanntmachung des Hinweises auf die Patenterteilung: **22.09.2004**
(21) Anmeldenummer: 00915137.4
(22) Anmeldetag: 02.03.2000
(51) Int. Cl.: G05B 19/409, G05B 23/02

(54) **AUGMENTED-REALITY-SYSTEM MIT EINSATZ MOBILER GERÄTE**
AUGMENTED REALITY SYSTEM USING MOBILE DEVICES
SYSTEME A REALITE AMPLIFIEE PERMETTANT L'UTILISATION D'APPAREILS MOBILES

(30) Priorität: 02.03.1999 DE 19909154; 02.03.1999 DE 19909023; 02.03.1999 DE 19909018; 02.03.1999 DE 19909012; 02.03.1999 DE 19909011; 02.03.1999 DE 19909010; 02.03.1999 DE 19909013; 02.03.1999 DE 19909009; 02.03.1999 DE 19909016
(43) Veröffentlichungstag der Anmeldung: 28.11.2001
(73) Patentinhaber: SIEMENS AKTIENGESELLSCHAFT, 80333 München (DE)
(72) Erfinder: FRIEDRICH, Wolfgang, D-91088 Bubenreuth (DE); WOHLGEMUTH, Wolfgang, D-91058 Erlangen (DE)
(86) Internationale Anmeldenummer: PCT/DE2000/000667
(87) Internationale Veröffentlichungsnummer: WO 2000/052540

(56) Entgegenhaltungen:
- EP-A- 0 597 127
- US-A- 5 712 649
- US-A- 5 748 495
- US-A- 5 850 352
- DAUDE R ET AL: "HEAD-MOUNTED DISPLAY ALS FACHARBEITERORIENTIERTE UNTERSTUETZUNGSKOMPONENTE AN CNC-WERKZEUGMASCHINEN" WERKSTATTSTECHNIK,DE,SPRINGER VERLAG. BERLIN, Bd. 86, Nr. 5, 1. Mai 1996 (1996-05-01), Seiten 248-252, XP000585192 ISSN: 0340-4544
- STOKER C R ET AL: "ANTARCTIC UNDERSEA EXPLORATION USING A ROBOTIC SUBMARINE WITH A TELEPRESENCE USER INTERFACE" IEEE EXPERT,US,IEEE INC. NEW YORK, Bd. 10, Nr. 6, 1. Dezember 1995 (1995-12-01), Seiten 14-23, XP000539881 ISSN: 0885-9000
- ITO S ET AL: "HUMAN ORIENTED OPERATION GUIDE FOR SUBSTATIONS" PROCEEDINGS OF THE INTERNATIONAL CONFERENCE ON SYSTEMS, MAN, AND CYBERNETICS,US,NEW YORK, IEEE, Bd. -, 1994, Seiten 1104-1109, XP000531218 ISBN: 0-7803-2130-8
- KUZUOKA H: "SPATIAL WORKSPACE COLLABORATION: A SHAREVIEW VIDEO SUPPORT SYSTEM FOR REMOTE COLLABORATION CAPABILITY" PROCEEDINGS OF THE CONFERENCE ON HUMAN FACTORS IN COMPUTING SYSTEMS,US,READING, ADDISON WESLEY, Bd. -, 1992, Seiten 533-540, XP000426833
- JOHNSON D: "SCADA SOFTWARE RAISES THE STAKES" CONTROL ENGINEERING INTERNATIONAL,US,CAHNERS PUBLISHING, Bd. 43, Nr. 14, 1. Oktober 1996 (1996-10-01), Seiten 80-82,84,86, XP000682154 ISSN: 0010-8049

## Beschreibung

Die Erfindung betrifft ein System zum Bedienen und Beobachten.

Ein derartiges System und Verfahren kommt beispielsweise im Bereich der Automatisierungstechnik, bei Produktions- und Werkzeugmaschinen, bei Diagnose-/Serviceunterstützungssystemen sowie für komplexe Komponenten, Geräte und Systeme, wie beispielsweise Fahrzeuge und industrielle Maschinen und Anlagen zum Einsatz.

In dem Fachartikel Daude R. et al: "Head-Mounted Display als facharbeiterorientierte Unterstützungskomponente an CNC-Werkzeugmaschinen", Werkstattstechnik, DE, Springer Verlag, Berlin, Bd. 86, Nr. 5, 1. Mai 1996, Seiten 248-252, XP000585192 ISSN: 0340-4544, wird mit dem Head-Mounted Display (HMD) eine Komponente zur Unterstützung des Facharbeiters beim Einrichten, Einfahren und Störungsmanagement bei der Fräsbearbeitung beschrieben. Die technische Anbindung des HMD an eine moderne NC-Steuerung wird erläutert und die Ergebnisse eines Laborversuchs mit dem HMD werden genannt.

Der Erfindung liegt die Aufgabe zugrunde, ein System und ein Verfahren anzugeben, das beim Bedienen und Beobachten insbesondere einer automatisierungstechnisch gesteuerten Vorrichtung/Anlage/Prozesses eine erhöhte Mobilität ermöglicht.

Diese Aufgabe wird durch ein System bzw. durch ein Verfahren mit den in den Ansprüchen 1 bzw. 7 angegebenen Merkmalen gelöst.

Der Erfindung liegt die Erkenntnis zugrunde, daß in komplexen Anlagen mit räumlich verteilten Einzelkomponenten, aber auch in Anwendungssituationen wo die Beweglichkeit des Werkers wichtig ist, die übliche Verwendung relativ starr installierter Systeme (z. B. Monitore, Bedienterminals) zur Visualisierung und Bedienung, eine deutliche Einschränkung des Handlungsspielraums darstellt. In der Regel ist der Werker/ Fach-. arbeiter situationsbedingt gezwungen, seine eigentliche Arbeitssituation zu verlassen, um an anderer Stelle Einblick in die aktuell relevanten Prozessdaten zu erhalten oder bestimmte Bedienvorgänge vornehmen zu können. Mit der Verwendung mobiler, tragbarer Geräte lassen sich verschiedene Arbeitssituationen benutzergerechter bewerkstelligen.

Gegebenenfalls erfolgt heutzutage der Einsatz mehrerer Monitore räumlich verteilt in der Anlage oder konzentriert beispielsweise in einer Leitwarte. Der Einsatz von bislang relativ starr installierten Systemen zur Visualisierung und Bedienung in der Anwendung, wird wie folgt ersetzt durch neuartige Geräte, die anwendungsgerecht in Kombination eingesetzt werden: Vor Ort, d.h. lokal an der Maschine/ Anlagenkomponente, kommen mehrere "Einfachstgeräte" zum Einsatz, die anwendungsgerecht spezialisiert sind.

Die vollständige Funktionalität zur anwendungsumfassenden Visualisierung und Bedienung, wird mittels leistungsfähigen Bedieneinheiten, die mobil eingesetzt werden können, bereitgestellt. Der wesentliche Vorteil liegt in der Aufhebung der Mobilitätseinschränkung des Werkers. Darüberhinaus kommen neuartige Interaktionstechniken zur Verwendung ... multimodal (Sprache, Gestik, ...). Die Bindung an fixe Terminals wird durch mobile Geräte ersetzt und es kommt zu einer Ablösung /Ergänzung der Maschinentafel durch eine Datenbrille oder zumindest zu einem kombinierten Einsatz mit lokalen Terminals.

Vorteilhafte Ausgestaltungen bestehen darin, daß die Dokumentationsdaten statische und/oder dynamische Informationsdaten sind. Beispiele für derartige statische Informationen sind technische Daten aus Handbüchern, Explosionszeichnungen, Wartungsanweisungen etc.. Beispiele für dynamische Informationen sind Prozeßwerte wie Temperatur, Druck, Signale etc.

Ein schneller situationsgerechter Zugang zu den Dokumentationsdaten wird dadurch weiter unterstützt, daß die Erfassungsmittel eine Bildaufnahmevorrichtung aufweisen, daß die Auswertemittel zur Auswertung der realen Information in der Weise vorgesehen sind, daß aus der realen Information ein Eisatzkontext, insbesondere ein Objekt der Dokumentationsdaten ermittelt wird und daß das System Visualisierungsmittel zur Visualisierung der Dokumentationsdaten aufweist.

Ein schneller situationsgerechter Zugang zu den Dokumentationsdaten wird dadurch weiter unterstützt, daß die Erfassungsmittel anwendergesteuert sind und insbesondere als sprachgesteuerte Erfassungsmittel und/oder durch Steuerdaten gesteuerte Erfassungsmittel ausgebildet sind.

Ein für viele Anwendungsfälle optimaler Einsatz von Augmented-Reality-Techniken auf Basis der statischen und/oder dynamischen Dokumentations- und/oder Prozeßdaten kann in der Weise erfolgen, daß die Erfassungsmittel und/oder die Visualisierungsmittel als Datenbrille ausgebildet sind.

Im folgenden wird die Erfindung anhand der in den Figuren dargestellten Ausführungsbeispiele näher beschrieben und erläutert.

Es zeigen:
- FIG 1: ein Blockschaltbild eines ersten Ausführungsbeispiels eines Augmented-Reality-Systems,
- FIG 2: ein weiteres Blockschaltbild eines Ausführungsbeispiels eines Augmented-Reality-Systems und
- FIG 3: ein Anwendungsbeispiel für einen situationsgerechten Zugriff auf Expertenwissen und/oder Dokumentationsdaten.

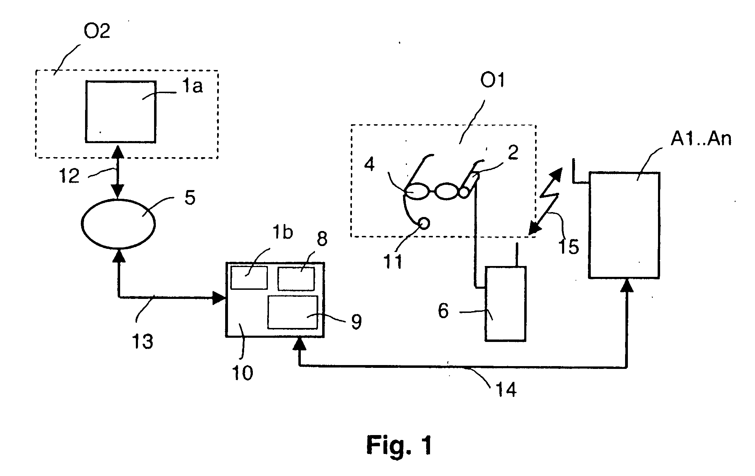

Figur 1 zeigt eine Prinzipdarstellung eines Augmented-Reality-Systems zur Übertragung von ersten Informationsdaten von einem ersten Ort O1 an einen entfernten zweiten Ort O2 eines Experten für eine Unterstützung eines Anwenders am ersten Ort O1 beispielsweise im Service- und/oder Reparaturfall durch den entfernten Experten am zweiten Ort. Der Anwender, der in Figur 1 nicht explizit dargestellt ist, ist mit mobilen Geräten 4, 6 ausgestattet. Die mobilen Geräte 4, 6 beinhalten eine Datenbrille 4, an der eine Videokamera 2 sowie ein Mikrofon 11 angeordnet ist. Die Datenbrille ist mit einer Einrichtung zur drahtlosen Kommunikation, beispielsweise einer Funk-Sende-Empfangsvorrichtung 6 gekoppelt, die über eine Funkschnittstelle 15 mit dem Automatisierungssystem A1..An kommunizieren kann. Das Automatisierungssystem A1..An ist über eine Datenverbindung 14 mit einem Augmented-Reality-System 10 koppelbar, welches im folgenden auch abkürzend als AR-System bezeichnet wird. Das AR-System enthält ein Informationsmodul 1b zur Speicherung bzw. zum Zugriff von bzw. auf Informationsdaten, ein AR-Basismodul 8 sowie ein AR-Anwendungsmodul 9. Das AR-System 10 ist über eine Datenverbindung 13 mit dem Internet 5 verbindbar, wobei über eine beispielhaft dargestellte Internetverbindung 12 ein Zugriff auf weitere Speicher- und Dokumentationsdaten 1a möglich ist.

Der Anwender, der mit der Datenbrille 4 und der mobilen Funk-Sende-Einrichtung 7 ausgestattet ist, ist in der Lage, sich für Wartungs- und Servicezwecke in der Anlage A1..An frei zu bewegen. Ist beispielsweise die Wartung oder Reparatur einer bestimmten Teilkomponente der Anlagen A1..An erforderlich, so wird mit Hilfe der Kamera 2 der Datenbrille 4 gegebenenfalls gesteuert durch Sprachkommandos, die vom Mikrofon 11 erfaßt werden, ein entsprechender Zugang zu den relevanten Dokumentationsdaten 1a, 1b hergestellt. Hierzu wird über die Funkschnittstelle 15 eine Datenverbindung zur Anlage A1..An oder einem entsprechenden Funk-Sende-Modul aufgebaut und die Daten an das AR-System 10 übermittelt. Im AR-System erfolgt eine situationsgerechte Auswertung der vom Anwender erhaltenen Daten und ein automatischer oder auch ein interaktiv vom Anwender gesteuerter Zugriff auf Inforamtionsdaten 1a, 1b. Die ermittelten relevanten Dokumentationsdaten 1a, 1b, werden über die Datenverbindungen 14, 15 an die Funk-Sende-Einrichtung 6 übermittelt und insgesamt erfolgt auf Basis der erfaßten Arbeitssituation somit eine Analyse, die Grundlage für die Auswahl von Daten aus der vorliegenden statischen Information ist. Hierdurch ergibt sich eine situationsgerechte, objektorientierte bzw. bauteilorientierte Auswahl relevanten Wissens aus den aktuellsten Datenquellen 1a, 1b. Die Anzeige der Information erfolgt mit Hilfe der jeweils verwendeten Visualisierungskomponente, beispielsweise einem Handheld-PC oder einer Datenbrille. Von AR-basierten Technologien gesprochen wird. Der Anwender vor Ort wird somit lediglich mit der Information versorgt, die er braucht. Diese Information befindet sich jeweils auf dem aktuellsten Stand. Der Servicetechniker wird beispielsweise nicht durch ein "100 Seiten-Manual" mit Informationen überfrachtet.

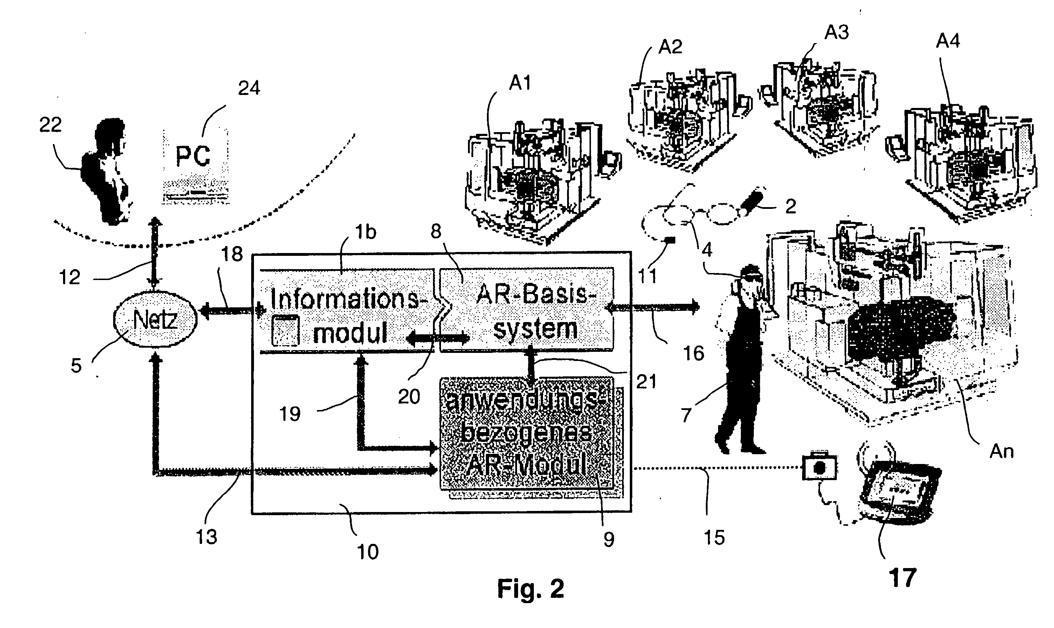

Figur 2 zeigt ein weiteres Anwendungsbeispiel eines Systems zur Dokumentationsverarbeitung für Service und Wartung. Das System besteht aus einem Augmented-Reality-System 10, welches ein Informationsmodul 1b zur Speicherung von Informationsdaten, ein AR-Basissystem 8 sowie ein AR-Anwendungsmodul 9 enthält. Das AR-System 10 ist über Bindungsleitungen 13, 18 ans Internet 5 ankoppelbar. Von dort besteht über eine beispielhafte Datenverbindung 12 eine Verbindungsmöglichkeit zu einem entfernten PC 16 mit einem entfernten Experten 22. Die Kopplung zwischen den einzelnen Modulen des AR-Systems 10 erfolgt über Verbindungen 19, 20, 21. Die Anwenderkommunikation zwischen einem Anwender 7 und dem AR-System erfolgt über Schnittstellen 8, 23. Hierzu ist das AR-System mit einer Sende-Empfangs-Vorrichtung koppelbar, die eine bidirektionale Datenkommunikation zwischen dem AR-System 10 und dem Anwender 7 über eine Datenbrille 4 entweder direkt über die Schnittstelle 8 oder über ein im Bereich des Anwenders 7 angeordnete Funk-Sende-Empfangseinrichtung 17 über eine Schnittstelle 23 ermöglicht. Die Verbindung 23 kann über eine separate Datenverbindung oder über das Stromnetz als "Power-Line"-Modem realisiert werden. Die Datenbrille 4 enthält neben einer im Bereich der Brillengläser angeordneten Anzeigevorrichtung eine Bilderfassungsvorrichtung 2 in Form einer Kamera sowie ein Mikrofon 11. Der Anwender 7 kann sich mit Hilfe der Datenbrille 4 im Bereich der Anlagen A1..An bewegen und Serviceoder Wartungsarbeiten durchführen.

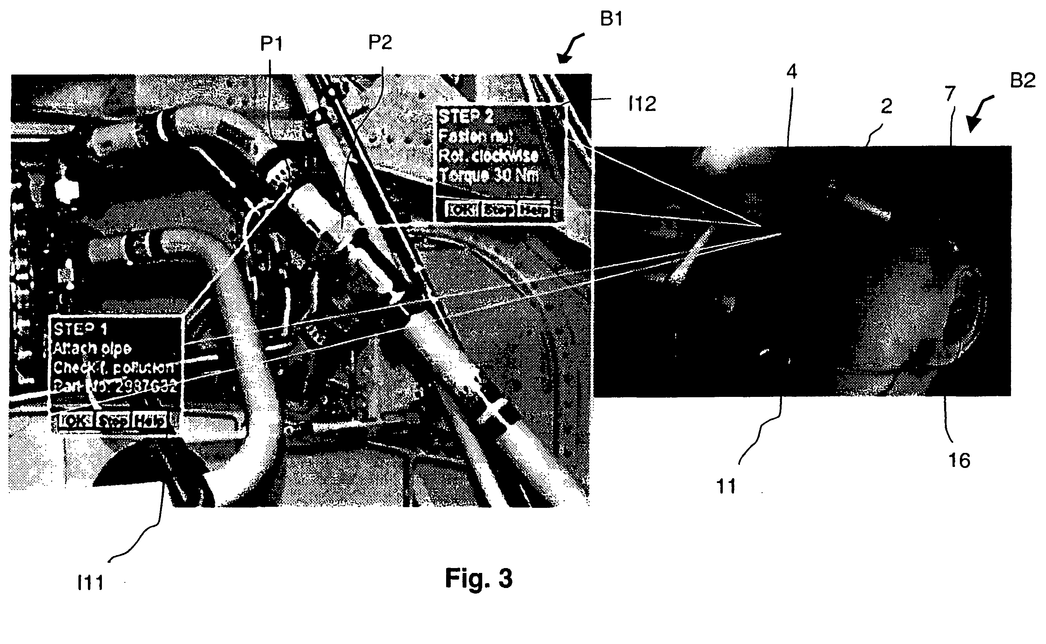

Mit Hilfe der Datenbrille 4 und der entsprechenden Funk-Sende-Empfangsvorrichtungen, beispielsweise der Funk-Sende-Empfangsvorrichtung 17, die vom Personal direkt am Körper getragen wird, ist es möglich vorbeugende Funktionalität zu erreichen: Zunächst erfolgt die Erfassung der jeweiligen Arbeitssituation, beispielsweise durch die Kamera 2 oder durch Lokalisierung durch das Personal 7. Auf Basis der erfaßten Arbeitsssituation erfolgt im AR-System eine Auswahl von Daten gewarteten Anlage A1..An. Der grundlegende Vorteil des in Figur 3 dargestellten Systems besteht darin, daß dieses System das Zusammenwirken der einzelnen Einzelfunktionalitäten anwendungsgerecht unterstützt: So wird zunächst eine konkrete Arbeitssituation automatisch erfaßt, diese Arbeitssituation anschließend analysiert, wobei aus der aktuellsten, vorliegenden statischen Information in Kombination mit den augenblicklich erfaßten dynamischen Daten automatisch die gerade relevanten Aspekte ermittelt werden. Hierdurch werden beispielsweise Montagehinweise mit aktuellen Prozeßdaten korreliert. Das Personal 7 erhält hierdurch eine situationsgerechte Anzeige der relevanten Informationen beispielsweise durch eine überlagerte Visualisierung der entsprechenden Daten in der Weise, daß im Sichtfeld des Personals die reale Arbeitssituation um die ermittelten Informationen erweitert wird. Hierdurch wird das Personal 7 in kürzester Zeit handlungsfähig gemacht und damit notwendige Maschinenlaufzeiten gesichert. Unterstützung kann der Wartungstechniker 7 vor Ort auch über den entfernten Experten 22 und das am Ort des entfernten Experten 22 vorliegende Wissen 16 erhalten.

Figur 3 zeigt ein Anwendungsbeispiel für einen situationsgerechten Zugriff auf Dokumentationsdaten. Figur 3 zeigt einen ersten Bildschirmbereich B1, in dem eine Anlagenkomponente dargestellt ist. Im rechten Bildschirmbereich B2 ist ein Anwender 7 dargestellt, der beispielsweise eine einzelne Anlagenkomponente betrachtet. Der Anwender 7 ist mit einer Datenbrille 4 augerüstet, die eine Kamera 2 als Erfassungsmittel enthält. An der Datenbrille 4 ist darüber hinaus ein Mikrofon 11 sowie ein Lautsprecher 16 angeordnet. Im linken Bildschirmbereicht B1 ist ein Blick auf Rohrleitungen dargestellt, die mit der im Bildfenster B2 dargestellten Datenbrille betrachtet werden können. Im linken Bildschirmbereich B1 sind zwei Punkte B1, B2 markiert, die jeweils zwei mit Hilfe der Datenbrille 4 betrachtete Bildausschnitte repräsentieren. Nach Betrachtung des ersten Punkts P1, d.h. nach Betrachtung der im Bereich des Punktes P1 angeordneten Rohrleitung werden dem Anwender 7 Zusatzinformationen in der Datenbrille 4 visualisiert. Diese Zusatzinformationen 11 bestehen aus Dokumentationsdaten, die bezüglich des ersten Punktes P1 Arbeitsanweisungen für dieses Rohrstück enthalten und bezüglich des Punktes P2 die in einem zweiten Schritt durchzuführende Installationsanweisung beinhalten. Die Installationsanweisung besteht in diesem Fall darin, daß dem Anwender 7 das Drehmoment und die Drehrichtung der Schraubverbindung des Punktes P2 über die Visualisierung der Zusatzdaten I12 mitgeteilt werden. Der Anwender 7 erhält somit innerhalb kürzester Zeit eine situationsgerechte Anweisung für das betrachtete Objekt. Bei der Verwendung eines intelligenten Werkzeugs, welches in der Lage ist, das gerade eingesetzte Drehmoment zu erfassen, ist es weiterhin möglich, daß der Anwender basierend auf dem aktuellen Drehmoment auch dazu aufgefordert wird, daß Drehmoment entsprechend zu erhöhen oder zu verringern.

Im folgenden werden Hintergrundinformationen zu Einsatzgebiet der Erfindung gegeben: Es geht dabei um eine anwendungsorientierte Anforderungsanalyse und Entwicklung von AR-basierten Systemen zur Unterstützung von Arbeitsprozessen in Entwicklung, Produktion und Service komplexer technischer Produkte und Anlagen in der Fertigungs- und Verfahrenstechnik, sowie für Systeme zur Serviceunterstützung wie bei Kraftfahrzeugen oder für die Wartung beliebiger technischer Geräte.

Augmented Reality, kurz AR, ist eine neue Art der Mensch-Technik-Interaktion mit großem Potential zur Unterstützung von industriellen Arbeitsprozessen. Bei-dieser Technologie wird das Sichtfeld des Betrachters mit rechnergenerierten virtuellen Objekten angereichert, so daß Produkt- bzw. Prozeßinformationen intuitiv genutzt werden können. Neben der sehr einfachen Interaktion erschließt der Einsatz tragbarer Computer AR-Anwendungsfelder mit hohen Mobilitätsanforderungen, wenn beispielsweise Prozeß-, Meß- oder Simulationsdaten an das reale Objekt geknüpft werden.

Die Situation der deutschen Industrie ist durch steigende Kundenanforderungen an Individualität und Qualität der Produkte sowie durch eine wesentliche Zeitverkürzung der Entstehungsprozesse gekennzeichnet. Insbesondere in Entwicklung, Produktion und Service komplexer technischer Produkte und Anlagen können mit innovativen Lösungen für die Mensch-Technik-Interaktion sowohl Effizienz- und Produktivitätssprünge erzielt werden, als auch die Arbeit kompetenz- und lernförderlich gestaltet werden, indem der Wissens- und Informationsbedarf der Benutzer auf der Basis ohnehin vorliegender Daten situationsgerecht unterstützt wird. Augmented Reality ist eine Technologie mit einer Vielzahl innovativer Anwendungsfelder:
- So kann z.B. in der **Entwicklung** ein "Mixed Mock-Up"-Ansatz auf der Grundlage einer gemischt-virtuellen Umgebung die frühen Entwicklungsphasen deutlich beschleunigen. Gegenüber immersiven, d.h. eintauchenden, "Virtual Reality"-(VR)-Lösungen besteht für den Benutzer ein wesentlicher Vorteil darin, daß die haptischen Eigenschaften mit Hilfe eines realen Modells naturgetreu abgebildet werden können, hingegen Aspekte der visuellen Wahrnehmung, z.B. für Anzeigenvarianten, virtuell manipulierbar sind. Darüber hinaus besteht ein großes Potential zur benutzerorientierten Validierung rechnergestützter Modelle, z.B. für die Bauteilverifikation oder bei Crash-Tests.
- In der flexiblen **Produktion** kann unter anderem das Einrichten von Maschinen für qualifizierte Facharbeiter wesentlich erleichtert werden, indem, z.B. durch mobile AR-Komponenten, gemischt-virtuelle-Spannsituationen direkt im Sichtfeld wiedergegeben werden. Eine facharbeitergerechte Fertigungsplanung und Fertigungssteuerung in der Werkstatt wird erleichtert, wenn Informationen über den jeweiligen Auftragsstatus direkt in Verbindung mit den dazugehörigen Produkten vor Ort wahrgenommen werden. Das gleiche gilt auch für die Montage, wobei dem Monteur bereits in der Trainingsphase die einzelnen Arbeitsschritte gemischt-virtuell präsentierbar sind. In diesem Zusammenhang können, z.B. durch den Vergleich realer Montageabläufe mit Simulationsergebnissen, umfassende Optimierungen erreicht werden, die sowohl die Qualität der Arbeitsplanung verbessern als auch den Montageprozeß in der kritischen Anlaufphase vereinfachen und beschleunigen.
- Letztlich genügen im **Service** herkömmliche Technologien kaum mehr, um die komplexen Diagnose- und Behebungsprozeduren zu unterstützen und zu dokumentieren. Da diese Prozesse in vielen Bereichen aber ohnehin auf Basis von digitalen Daten geplant werden, bieten AR-Technologien die Möglichkeit, die Informationsquellen für die Wartung zu übernehmen und einem Techniker, z.B. in der Datenbrille, durch die Überlagerung mit realen Objekten den Ausbauvorgang zu erläutern. Mit Bezug auf kooperative Arbeit ermöglicht das AR-gestützte "Fernauge" eine verteilte Problemlösung, indem ein entfernter Experte mit dem Mitarbeiter vor Ort über globale Distanzen hinweg kommuniziert. Dieser Fall ist besonders für die überwiegend mittelständischen Werkzeugmaschinenhersteller relevant. Sie sind durch die Globalisierung gezwungen, Produktionsstätten ihrer Kunden weltweit zu errichten. Jedoch ist eine Präsenz von Niederlassungen in allen wichtigen Märkten weder aus wirtschaftlichen Gründen realisierbar, noch kann auf das profunde Wissen erfahrener Service-Mitarbeiter des Stammhauses bzgl. der zunehmend komplexer werdenden Anlagen verzichtet werden.

Die Besonderheit in der Mensch-Technik-Interaktion bei Augmented Reality liegt in einer sehr einfachen und intuitiven Kommunikation mit dem Computer, beispielsweise ergänzt durch multimodale Interaktionstechniken wie Sprachverarbeitung oder Gestikerkennung. Die Verwendung von tragbaren Computereinheiten ermöglicht darüber hinaus völlig neue mobile Nutzungsszenarien, wobei die spezifischen Daten jederzeit über ein drahtloses Netz angefordert werden können. Neue Visualisierungstechniken erlauben eine direkte Annotation, z.B. von Meß- oder Simulationsdaten, an das reale Objekt oder in die reale Umgebung. In Verbindung mit verteilten Anwendungen sind mehrere Benutzer in der Lage, in einer realen Umgebung mit Hilfe einer gemeinsamen Datenbasis zu arbeiten (shared augmented environments) oder in verschiedenen Umgebungen ARgestützt zu kooperieren.

Augmented Reality wird erst seit wenigen Jahren intensiv erforscht. Deshalb finden sich sowohl auf nationaler als auch internationaler Ebene nur wenige Anwendungen, zumeist in Form von wissenschaftlichen Prototypen bei Forschungseinrichtungen.
- *USA:* Wie bei vielen neuen Technologien wurden die Nutzungspotentiale von Augmented Reality zuerst in Nordamerika erschlossen. Beispiele sind die Cockpitgestaltung oder die Wartung von mechatronischen Geräten. Der Flugzeughersteller Boeing hat bereits erste Feldversuche im Bereich der Montage mit AR-Technologien unternommen. Ergebnis ist, daß den USA auch in diesem Hightech-Bereich eine Schlüsselstellung zukommt, die mit einer möglichen Technologieführerschaft einhergeht.
- *Japan:* In Japan werden verschiedene AR-Entwicklungen vorangetrieben, z.B. zur gemischt-virtuellen Gebäudeplanung, Telepräsenz oder "Cyber-Shopping". Keimzelle ist das 1997 gegründete Mixed Reality Systems Laboratory, das als Kompetenzzentrum gemeinsam von Wirtschaft und Wissenschaft getragen wird. Besondere Impulse im Konsumgüterbereich sind zukünftig durch die japanische Industrie für Unterhaltungselektronik zu erwarten.
- *Europa:* In Europa sind bislang nur sehr wenige Forschergruppen im AR-Bereich tätig. Eine Gruppe an der Universität Wien befaßt sich mit Ansätzen für die gemischt-reale Visualisierung. Die Gruppe des IGD hat im Rahmen des inzwischen ausgelaufenen ACTS-Projektes CICC erste Anwendungen für die Bauindustrie und einen wissenschaftlichen Prototypen zur Mitarbeiterschulung im Automobilbau entwickelt.

Die im Erfindung versteht sich insbesondere im speziellen Kontext der Anwendungsfelder "Produktions- und Werkzeugmaschinen" (NC-gesteuerte, automatisierungstechnische Prozesse) sowie "Diagnose-/Serviceunterstützungssysteme für komplexe technische Komponenten/Geräte/Systeme" (z.B. Fahrzeuge, aber auch industrielle Maschinen und Anlagen).

In komplexen Anlagen mit räumlich verteilten Einzelkomponenten, aber auch in Anwendunsgsituationen wo die Beweglichkeit des Werkers wichtig ist stellt die übliche Verwendung relativ starr installierter Systeme (z.B. Monitore, Bedienterminals) zur Visualisierung und Bedienung, eine deutliche Einschränkung des Handlungsspielraums dar.

In der Regel ist der Werker/Facharbeiter situationsbedingt gezwungen, seine eigentliche Arbeitssituation zu verlassen, um an anderer Stelle Einblick in die aktuell relevanten Prozeßdaten zu erhalten oder bestimmte Bedienvorgänge vornehmen zu können. Mit der Verwendung mobiler, tragbarer Geräte lassen sich verschiedene Arbeitssituationen benutzergerechter bewerkstelligen.

Gegebenenfalls erfolgt heutzutage der Einsatz mehrerer Monitore räumlich verteilt in der Anlage oder konzentriert beispielsweise in einer Leitwarte.

Der Einsatz von bislang relativ starr installierten Systemen zur Visualisierung und Bedienung in der Anwendung, wird wie folgt ersetzt durch neuartige Geräte, die anwendungsgerecht in Kombination eingesetzt werden: Vor Ort, d.h. lokal an der Maschine/Anlagenkomponente, kommen mehrere "Einfachstgeräte" zum Einsatz, die anwendungsgerecht spezialisiert sind.
Die vollständige Funktionalität zur anwendungsumfassenden Visualisierung und Bedienung, wird mittels leistungsfähigen Bedieneinheiten, die mobil eingesetzt werden können, bereitgestellt. Der wesentliche Vorteil liegt in der Aufhebung der Mobilitätseinschränkung des Werkers. Darüber hinaus kommen neuartige Interaktionstechniken zur Verwendung ... multimodal (Sprache, Gestik, ...)

Bindung an fixe Terminals wird durch mobile Geräte ersetzt Ablösung /Ergänzung der Maschinentafel durch Datenbrille Der kombinierte Einsatz mit lokalen Terminals

Zusammenfassend betrifft die Erfindung somit ein Bedien- und Beobachtungssystem, insbesondere für ein Automatisierungssystem, das aus mindestens einem ersten Bedien- und Beobachtungssystem mit einer leistungsfähigen Funktionalität und aus einer Vielzahl weiteren Bedien- und Beobachtungswerkzeug mit einer eingeschränkten Funktionalität gebildet wird. Das erste Bedien- und Beobachtungssystem mit der leistungsfähigen Funktionalität ist mobil ausgebildet, wodurch es zu einer Aufhebung von Mobilitätsbeschränkungen kommt.

## Patentansprüche

1. Augmented-Reality-System zum Bedienen und Beobachten mit mindestens einem ersten Bedien- und Beobachtungssystem mit einer leistungsfähigen Funktionalität und mit einer Vielzahl von weiteren Bedien- und Beobachtungswerkzeugen mit einer eingeschränkten Funktionalität, wobei das erste Bedien- und Beobachtungssystem mit der leistungsfähigen Funktionalität mobil ausgebildet ist und für eine Erzielung einer vollen Leistungsfähigkeit zur Kopplung mit den weiteren Bedien- und Beobachtungswerkzeugen vorgesehen ist,
- mit Erfassungsmitteln (2, 11) mit einer Sensorik, insbesondere mit einer Bildaufnahmevorrichtung, zur Erfassung von ersten Informationsdaten sowie Visualisierungsmitteln (4) zur Visualisierung von zweiten Informationsdaten und
- mit Auswertemitteln zur Auswertung der erfassten ersten Informationsdaten, wobei aus der erfassten Information ein Einsatzkontext, insbesondere ein Objekt der zweiten Informationsdaten, ermittelt wird und wobei eine situationsgerechte, objektorientierte und/oder bauteilorientierte Auswahl aus den zweiten Informationsdaten für die Visualisierung erfolgt.

2. System nach Anspruch 1,
**dadurch gekennzeichnet,**
**dass** die mobilen Bedien- und Beobachtungswerkzeuge über multimodale Interaktionstechniken ansteuerbar sind.

3. System nach einem der Ansprüche 1 oder 2,
**dadurch gekennzeichnet,**
**dass** die Erfassungsmittel (2) anwendergesteuert sind..

4. System nach einem der Ansprüche 1 bis 3,
**dadurch gekennzeichnet,**
**dass** die Erfassungsmittel (2) als sprachgesteuerte Erfassungsmittel ausgebildet sind.

5. System nach einem der Ansprüche 1 bis 4,
**dadurch gekennzeichnet,**
**dass** die Erfassungsmittel (2) als durch Steuerdaten gesteuerte Erfassungsmittel ausgebildet sind.

6. System nach einem der Ansprüche 1 bis 5,
**dadurch gekennzeichnet,**
**dass** die Visualisierungsmittel (4) als im Bereich von Brillengläsern einer Datenbrille angeordnete Anzeigevorrichtungen ausgebildet sind, dass als Erfassungsmittel (2) eine an der Datenbrille angeordnete Bilderfassungsvorrichtung vorgesehen ist und dass zur Erfassung von Sprachkommandos ein an der Datenbrille angeordnetes Mikrofon (11) vorgesehen ist.

7. Verfahren zum Bedienen und Beobachten einer automatisierungstechnisch gesteuerten Vorrichtung mittels Augmented-Reality-Techniken,
- bei dem die automatisierungstechnisch gesteuerte Vorrichtung über ein erstes Bedien- und Beobachtungssystem mit einer leistungsfähigen Funktionalität in Kombination mit einer Vielzahl von weiteren Bedien- und Beobachtungswerkzeugen mit einer eingeschränkten Funktionalität steuerbar ist, wobei das erste Bedien- und Beobachtungssystem mit der leistungsfähigen Funktionalität mobil ausgebildet ist und für eine Erzielung einer vollen Leistungsfähigkeit zur Kopplung mit den weiteren Bedien- und Beobachtungswerkzeugen vorgesehen ist,
- bei dem erste Informationsdaten mittels Erfassungsmitteln (2, 11) mit einer Sensorik, insbesondere mit einer Bildaufnahmevorrichtung, erfasst und zweite Informationsdaten mittels Visualisierungsmitteln (4) visualisiert werden und
- bei dem die erfassten ersten Informationsdaten ausgewertet werden, wobei aus der erfassten Information ein Einsatzkontext, insbesondere ein Objekt der zweiten Informationsdaten, ermittelt wird und wobei eine situationsgerechte, objektorientierte und/oder bauteilorientierte Auswahl aus den zweiten Informationsdaten für die Visualisierung erfolgt.

8. Verfahren nach Anspruch 7,
**dadurch gekennzeichnet,**
**dass** die mobilen Bedien- und Beobachtungswerkzeuge über multimodale Interaktionstechniken ansteuerbar sind.

9. Verfahren nach einem der Ansprüche 7 oder 8,
**dadurch gekennzeichnet,**
**dass** die Erfassungsmittel (2) anwendergesteuert sind.

10. Verfahren nach einem der Ansprüche 7 bis 9,
**dadurch gekennzeichnet,**
**dass** die Erfassungsmittel (2) als sprachgesteuerte Erfassungsmittel ausgebildet sind.

11. Verfahren nach einem der Ansprüche 7 bis 10,
**dadurch gekennzeichnet,**
**dass** die Erfassungsmittel (2) als durch Steuerdaten gesteuerte Erfassungsmittel ausgebildet sind.

12. Verfahren nach einem der Ansprüche 7 bis 11,
**dadurch gekennzeichnet,**
**dass** die Visualisierungsmittel (4) als im Bereich von Brillengläsern einer Datenbrille angeordnete Anzeigevorrichtungen ausgebildet sind, dass als Erfassungsmittel (2) eine an der Datenbrille angeordnete Bilderfassungsvorrichtung vorgesehen ist und dass zur Erfassung von Sprachkommandos ein an der Datenbrille angeordnetes Mikrofon (11) vorgesehen ist.

## Claims

1. An augmented-reality system for operation and observation, having at least one first operating and observation system having extensive functionality and a multiplicity of further operating and observation tools having limited functionality, wherein the first operating and observation system having the extensive functionality is designed to be mobile and, to achieve full performance, is designed to be coupled with the further operating and observation tools,
- having acquisition means (2, 11) comprising sensorics, in particular an image recording device for acquiring first information data and visualization means (4) for visualizing second information data, and
- having analyzing means for analyzing the first information data acquired, an operational context, particularly an object of the second information data, being determined from the information acquired, and a situationally appropriate, object-oriented and/or component-oriented selection being made from the second information data for the visualization.

2. The system according to Claim 1, **characterized in that** the mobile operating and observation tools can be driven by multimode interaction techniques.

3. The system according to one of Claims 1 or 2, **characterized in that** the acquisition means (2) are user-controlled.

4. The system according to one of Claims 1 to 3, **characterized in that** the acquisition means (2) are designed as speech-controlled acquisition means.

5. The system according to one of Claims 1 to 4, **characterized in that** the acquisition means (2) are designed as acquisition means controlled by control data.

6. The system according to one of Claims 1 to 5, **characterized in that** the visualization means (4) are designed as display devices disposed in the vicinity of eye pieces of data goggles, that an image recording device is provided disposed on the data goggles as acquisition means (2) and that a microphone (11) disposed on the data goggles is providing for detecting speech commands.

7. A method of operating and observing, by means of augmented-reality techniques, an automatically controlled apparatus,
- wherein the apparatus controlled by automation technology can be controlled via a first operating and observation system having extensive functionality in combination with a multiplicity of further operating and observation tools having limited functionality, wherein the first operating and observation system having the extensive functionality is designed to be mobile and, to achieve full performance, is designed to be coupled with the further operating and observation tools,
- wherein the first information data is acquired by means of acquisition means (2, 11) comprising sensorics, in particular an image recording device, and in that second information data is visualized by means of visualizing means (4), and
- wherein the first information data acquired is analyzed, an operational context, particularly an object of the second information data, being determined from the information acquired, and a situationally appropriate, object-oriented and/or component-oriented selection being made from the second information data for the visualization

8. The method according to Claim 7, **characterized in that** the mobile operating and observation tools can be driven by multimode interaction techniques.

9. The method according to one of Claims 7 or 8, **characterized in that** the acquisition means (2) are user-controlled.

10. The method according to one of Claims 7 to 9, **characterized in that** the acquisition means (2) are designed as speech-controlled acquisition means.

11. The method according to one of Claims 7 to 10, **characterized in that** the acquisition means (2) are designed as acquisition means controlled by control data.

12. The method according to one of Claims 7 to 11, **characterized in that** the visualization means (4) are designed as display devices disposed in the vicinity of eye pieces of data goggles, that an image recording device is provided disposed on the data goggles as an acquisition means (2) and that a microphone (11) disposed on the data goggles is provided for detecting speech commands.

## Revendications

1. Système à réalité amplifiée pour la commande et l'observation avec au moins un premier système de commande et d'observation ayant une fonctionnalité performante et comprenant plusieurs autres outils de commande et d'observation ayant une fonctionnalité limitée, le premier système de commande et d'observation ayant une fonctionnalité performante étant conçu sous forme mobile et étant prévu pour atteindre des performances totales pour le couplage aux autres outils de commande et d'observation,
- ayant des moyens d'acquisition (2, 11) comportant une technique sensorielle, notamment un dispositif d'enregistrement d'image, pour l'acquisition de premières données d'information ainsi qu'avec des moyens de visualisation (4) pour la visualisation de deuxièmes données d'information, et
- ayant des moyens d'évaluation pour l'évaluation des premières données d'information acquises, un contexte d'utilisation, notamment un objet des deuxièmes données d'information, étant déterminé à partir de l'information acquise et une sélection adaptée à la situation, orientée objet et/ou orientée composant, s'effectuant parmi les deuxièmes données d'information pour la visualisation.

2. Système selon la revendication 1,
**caractérisé par le fait que** les outils de commande et d'observation mobiles peuvent être commandés par des techniques d'interaction multimodales.

3. Système selon l'une des revendications 1 ou 2,
**caractérisé par le fait que** les moyens d'acquisition (2) sont commandés par l'utilisateur.

4. Système selon l'une des revendications 1 à 3,
**caractérisé par le fait que** les moyens d'acquisition (2) sont conçus comme des moyens d'acquisition à commande vocale.

5. Système selon l'une des revendications 1 à 4,
**caractérisé par le fait que** les moyens d'acquisition (2) sont conçus comme des moyens d'acquisition commandés par des données de commande.

6. Système selon l'une des revendications 1 à 5,
**caractérisé par le fait que** les moyens de visualisation (4) sont conçus comme des dispositifs d'affichage placés dans la zone de verres de lunettes de données, qu'un dispositif d'enregistrement d'image placé sur les lunettes de données est prévu comme moyen d'acquisition (2) et qu'un microphone (11) placé sur les lunettes de données est prévu pour l'acquisition de commandes vocales.

7. Procédé pour la commande et l'observation d'un dispositif commandé automatisé au moyen de techniques à réalité amplifiée,
- dans lequel le dispositif commandé automatisé peut être commandé par l'intermédiaire d'un premier système de commande et d'observation ayant une fonctionnalité performante en combinaison avec plusieurs autres outils de commande et d'observation ayant une fonctionnalité limitée, le premier système de commande et d'observation ayant une fonctionnalité performante étant conçu sous forme mobile et étant prévu pour atteindre des performances totales pour le couplage aux autres outils de commande et d'observation,
- dans lequel des premières données d'information sont acquises avec des moyens d'acquisition (2, 11) comportant une technique sensorielle, notamment un dispositif d'enregistrement d'image, et des deuxièmes données d'information sont visualisées avec des moyens de visualisation (4), et
- dans lequel les premières données d'information acquises sont évaluées, un contexte d'utilisation, notamment un objet des deuxièmes données d'information, étant déterminé à partir de l'information acquise et une sélection adaptée à la situation, orientée objet et/ou orientée composant, s'effectuant parmi les deuxièmes données d'information pour la visualisation.

8. Procédé selon la revendication 7,
**caractérisé par le fait que** les outils de commande et d'observation mobiles peuvent être commandés par des techniques d'interaction multimodales.

9. Procédé selon l'une des revendications 7 ou 8,
**caractérisé par le fait que** les moyens d'acquisition (2) sont commandés par l'utilisateur.

10. Procédé selon l'une des revendications 7 à 9,
**caractérisé par le fait que** les moyens d'acquisition (2) sont conçus comme des moyens d'acquisition à commande vocale.

11. Procédé selon l'une des revendications 7 à 10,
**caractérisé par le fait que** les moyens d'acquisition (2) sont conçus comme des moyens d'acquisition commandés par des données de commande.

12. Procédé selon l'une des revendications 7 à 11,
**caractérisé par le fait que** les moyens de visualisation (4) sont conçus comme des dispositifs d'affichage placés dans la zone de verres de lunettes de données, qu'un dispositif d'enregistrement d'image placé sur les lunettes de données est prévu comme moyen d'acquisition (2) et qu'un microphone (11) placé sur les lunettes de données est prévu pour l'acquisition de commandes vocales.
